## Europäisches Patentamt

## European Patent Office

## Office européen des brevets

(11) Veröffentlichungsnummer: **0 213 379**
**B1**

(12) **EUROPÄISCHE PATENTSCHRIFT**

(45) Veröffentlichungstag der Patentschrift:
06.09.89

(51) Int. Cl.⁴: **C04B 2/10**, C04B 2/12,
F27D 15/02, F27B 1/00

(21) Anmeldenummer: 86110272.1

(22) Anmeldetag: 25.07.86

(54) Verfahren zur Herstellung von wasserfreiem oder wasserarmem gebrannten Kalk.

(30) Priorität: 06.08.85 DE 3528166

(43) Veröffentlichungstag der Anmeldung:
11.03.87 Patentblatt 87/11

(45) Bekanntmachung des Hinweises auf die Patenterteilung:
06.09.89 Patentblatt 89/36

(84) Benannte Vertragsstaaten:
BE DE FR GB IT LU SE

(56) Entgegenhaltungen:
AT-B- 103 503
DE-A- 3 140 582
JP-A- 58 181 745
US-A- 4 189 299

G. HOFMANN "Industrieöfen", Band 1 "Verfahren und Apparate der thermischen Technologie", 1969, VEB DEUTSCHER VERLAG FÜR GRUNDSTOFFINDUSTRIE, Leipzig, Seiten 139, 140
ZEMENT-KALK-GIPS, Heft 10, Oktober 1980, Wiesbaden; M. GEBICA "Bedeutung verschiedener Einflußfaktoren und Verfahren beim neuzeitlichen Kalkbrennen", Seiten 508-514
ZEMENT-KALK-GIPS, Heft 10, Oktober 1972, Wiesbaden; K. BECKENBACH "Die neuere Entwicklung des Koppelschrägofens, Seiten 481-483

(73) Patentinhaber: SKW Trostberg Aktiengesellschaft,
Dr.-Albert-Frank-Strasse 32 Postfach 1150/1160,
D-8223 Trostberg(DE)

(72) Erfinder: Botsch, Gunther, Sonnenleite 10,
D-8223 Trostberg(DE)
Erfinder: Weber, Peter, Dr., Carostrasse 12, D-8424 Saal a.d. Donau(DE)

(74) Vertreter: Weickmann, Heinrich, Dipl.-Ing. et al,
Patentanwälte Dipl.-Ing. H.Weickmann Dipl.-Phys.Dr. K.Fincke Dipl.-Ing. F.A.Weickmann Dipl.-Chem. B. Huber Dr.-Ing. H. Liska Dipl.-Phys.Dr. J. Prechtel
Postfach 860820, D-8000 München 86(DE)

## Beschreibung

Die Erfindung betrifft ein Verfahren zur Herstellung von wasserfreiem oder wasserarmem gebranntem Kalk in Kalkbrennöfen.

Bei der großtechnischen Herstellung von Branntkalk durch Brennen in Schachtöfen unter Abspaltung von $CO_2$ wird der Schachtofen in der Regel von oben mit stückigem Kalkstein, gegebenenfalls mit Brennstoff wie z.B. Kohle gemischt, beschickt, während Kühl- und Verbrennungsluft von unten nach oben durch den Schacht geleitet werden. Hierbei fällt das Produkt normalerweise mit einem Feuchtigkeitsgehalt von 0,7 bis 1,5 % an.

Für viele Verwendungszwecke, insbesondere in der Stahl- und Eisenindustrie, wird jedoch weitgehend wasserarmer oder wasserfreier gebrannter Kalk benötigt. Es sind bisher nur wenige Verfahren zur Herstellung eines solchen Spezialbranntkalks bekannt.

So ist es bekannt, hydratisierten Kalk nach seiner Herstellung nochmals auf über 500°C zu erhitzen, um das gesamte Hydratwasser auszutreiben (R.S. Boynton: Chemistry and Technology of Lime and Limestone, 1966 S. 318-19). Dieses Verfahren ist jedoch für den technischen Maßstab ungeeignet, da es viel zu aufwendig ist, die Abkühlung des Branntkalks in einem völlig geschlossenen System durchzuführen.

Weiterhin ist es bekannt, gebrannten Kalk durch Bürsten, Schütteln oder ähnliche Maßnahmen von der hydratisierten Außenhülle des gebrannten Guts zu befreien, die mit Wasser, Säure-Anionen und dgl. angereichert ist.

Das einzige bisher brauchbare großtechnische Verfahren, wasserärmeren gebrannten Kalk zu produzieren, besteht darin, den Kalk sehr hart zu brennen. Bei diesem Brennvorgang schrumpft die Gesamtoberfläche des Materials erheblich. Hierdurch wird zwar die Aufnahme der Luftfeuchtigkeit erschwert, gleichzeitig allerdings auch die Reaktionsfähigkeit des gebrannten Kalks drastisch vermindert. Außerdem ist das Verfahren durch den höheren Energieverbrauch in wirtschaftlicher Hinsicht problematisch. Auch kann Kalk mit Wassergehalten < 0,5 % auf diese Weise nicht hergestellt werden.

Der Erfindung liegt daher die Aufgabe zugrunde, ein Verfahren zur Herstellung von wasserfreiem oder wasserarmem gebranntem Kalk zu entwickeln, welches die genannten Nachteile des Standes der Technik nicht aufweist, geringen technischen Aufwand erfordert und ein Produkt mit guter Reaktivität liefert.

Diese Aufgabe wird erfindungsgemäß durch das in Anspruch 1 definierte Verfahren gelöst.

Es hat sich nämlich überraschenderweise gezeigt, daß der Luft beim Durchleiten durch den gebrannten Kalk praktisch die gesamte Feuchtigkeit entzogen wird und dies ausreicht, um beim anschließenden Abkühlen des mit dieser so vorbehandelten Luft gebrannten/gekühlten Kalks diesen in praktisch wasserfreier Form zu erhalten. Auf diese Weise wird das Vorurteil überwunden, wonach im normalen Kalkofen wasserfreier gebrannter Kalk nicht herzustellen sei.

Beim Verfahren entsprechend der vorliegenden Erfindung wird die Kühl- bzw. Verbrennungsluft erst vollständig durch eine Schüttung von gebranntem Kalk geführt und anschließend in die Kühl- bzw. Verbrennungszonen des Kalkofens geleitet.

Die Menge des für das Verfahren der Erfindung benötigten gebrannten Kalks richtet sich außer nach der Reaktivität und dem CaO-Gehalt dieses Kalkes im wesentlichen nach dem Feuchtigkeitsgehalt und der Einblasgeschwindigkeit der eingesetzten Luft und kann entsprechend angepaßt werden. Es hat sich gezeigt, daß im Normalfall pro $Nm^3$ Luft 0,2 bis 5 kg gebrannter Kalk benötigt werden. Die Korngröße kann in weiten Grenzen variiert werden, je nachdem in welcher Ausführungsform das erfindungsgemäße Verfahren betrieben wird. Der Korngrößenbereich liegt im allgemeinen zwischen 0,1 und 200 mm, vorzugsweise zwischen 20 und 150 mm. Es kann also Stück-, Korn- und Feinkalk in gleicher Weise verwendet werden.

Die Temperatur, bei der die Adsorption des Wassers durch das Calciumoxid stattfindet, sollte zwischen 10 und ca. 200°C liegen. Bei wesentlicher Überschreitung dieser oberen Temperaturgrenze läßt die Adsorptionswirkung merklich nach.

In einer bevorzugten Ausführungsform der Erfindung wird ein Teil des beim Brennen des Kalksteins erzeugten Branntkalks zur Lufttrocknung verwendet. Dies kann zweckmäßig in der Form durchgeführt werden, daß man einen Teil des erzeugten Branntkalks kontinuierlich in einen Vorratsbehälter oder Bunker einträgt, der dem Brennofen vorgeschaltet wird und beim Schachtofen aus praktischen Gründen unterhalb des Schachtofens, bei einem Drehofen hinter diesem, angeordnet wird.

Befindet sich die Schüttung in einem einzigen ungeteilten Bunker, so wird der jeweils unterste oder vorderste Teil der Bunkerschüttung, der zuerst von der feuchten Kühl- bzw. Verbrennungsluft durchströmt wird und die Luftfeuchtigkeit hauptsächlich aufnimmt, nach der Austragung aus dem Bunker getrennt von dem oberen bzw. hinteren Teil der Schüttung, die wasserarmen bzw. wasserfreien gebrannten Kalk einhält, gelagert. Hierbei ist darauf zu achten, daß die Schüttung bei der Austragung nicht vermischt, sondern gleichmäßig aus dem Bunker entfernt wird. Im Normalfall wird etwa ein Drittel des in einem so geführten Ofen gebrannten Kalkes als zumindest wasserarm eingestuft werden können.

Gemäß einer weiteren Ausführungsform des erfindungsgemäßen Verfahrens wird die Kühl- bzw. Verbrennungsluft zuerst über den bereits gebrannten Kalk eines ersten Brennofens, der dann als Schüttung dient, geleitet und anschließend in trockener Form einem zweiten Ofen zugeführt.

Bei beiden Verfahrensvarianten wird vorzugsweise gebrannter Kalk in stückiger Form eingesetzt. Es ist jedoch auch möglich, stattdessen eine Schüttung aus feinkörnigem Kalk, wie er als Abfallprodukt beim Kalkbrennprozeß entsteht, als Adsorbens einzusetzen.

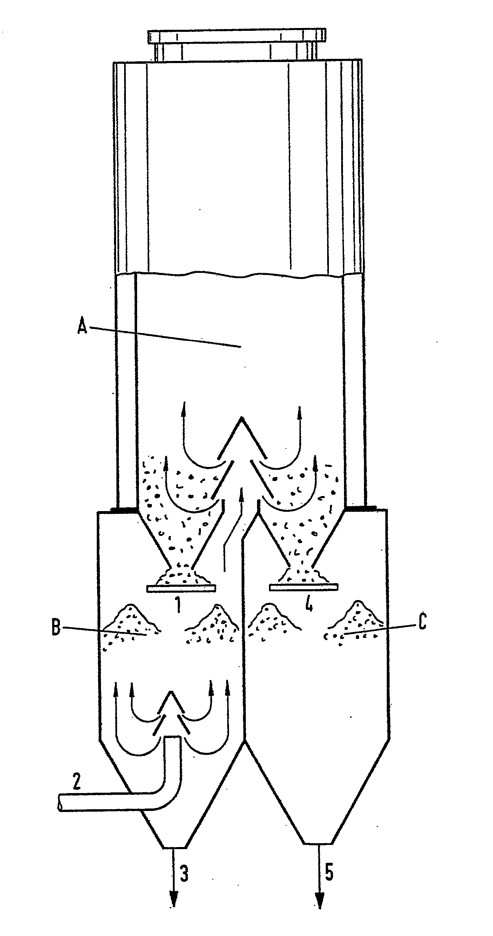

In Figur 1 der Zeichnung wird eine bevorzugte Ausführungsform dargestellt, welche sich besonders gut in den bestehenden Kalkbrennprozeß eines Schachtofens integrieren läßt. Im unteren Teil des Schachtofens A sind 2 Bunker B und C angeordnet. Im Vorratsbunker B befindet sich eine Schüttung aus gebranntem Kalk, welcher über die Austragsvorrichtung (1) vom Schachtofen A in den Bunker B eingebracht wird. In den Bunker B wird über Leitung (2) feuchte Kühl- bzw. Verbrennungsluft eingeleitet und gelangt über die Branntkalk-Schüttung in den Schachtofen. Der gebildete hydratisierte Branntkalk wird über Leitung (3) kontinuierlich entfernt. Die Hauptmenge des im Schachtofen A erzeugten wasserfreien Branntkalks gelangt durch entsprechende Steuerung über die Öffnung (4) in den Austragsbunker C und wird kontinuierlich über die Vorrichtung (5) ausgetragen.

Mit Hilfe des erfindungsgemäßen Verfahrens ist es möglich, praktisch wasserfreien Branntkalk, der einen Restfeuchtigkeitsgehalt von < 0,1 % aufweist und der auch hinsichtlich seiner Reaktivität hervorragende Eigenschaften besitzt, auf äußerst kostengünstige Weise herzustellen.

Das nachfolgende Beispiel erläutert die Erfindung unter Bezugnahme auf die Zeichnung, ohne sie jedoch darauf zu beschränken:

Beispiel:

In einem üblichen Schachtofen A werden 7,5 t Branntkalk/Std. produziert. Ein Drittel des sehr weich gebrannten Kalks wird kontinuierlich in einem ersten Bunker B unterhalb des Schachtofens A ausgetragen. Durch diese Branntkalk-Schüttung, deren Korngröße 100 bis 180 mm beträgt, werden 7500 Nm³ Luft/Std. eingeleitet und anschließend dem Schachtofen A zugeführt. Der im Schachtofen A erzeugte Branntkalk wird in einer Menge von 5 t/Std. in wasserfreier Form (Feuchtigkeitsgehalt < 0,1 %) über einen zweiten Bunker C ausgetragen. Der Feuchtigkeitsgehalt des teilweise hydratisierten Kalks im ersten Bunker B beträgt im unteren Teil im Mittel 0,6 % und im oberen Teil 0,1 %.

## Patentansprüche

1. Verfahren zur Herstellung von wasserfreiem oder wasserarmem Kalk im Kalkbrennofen, dadurch gekennzeichnet, daß man aus einem vertikalen Kalkbrennofen kontinuierlich oder intermittierend einen Teil des gebrannten Kalks nach unten in einen vorgeschalteten Behälter überführt und die Kühlluft, gegebenenfalls zusammen mit der Verbrennungsluft, zur Trocknung durch die in diesem Behälter gebildete Schüttung von gebranntem Kalk nach oben in den Kalkbrennofen leitet und hydratisierten Kalk aus dem Behälter nach unten austrägt.

2. Verfahren nach Anspruch 1,
**dadurch gekennzeichnet,**
daß man pro Nm³ Kühl- bzw. Verbrennungsluft 0,2 bis 5 kg gebrannten Kalk in der Schüttung verwendet.

3. Verfahren nach Ansprüchen 1 und 2,
**dadurch gekennzeichnet,**
daß der gebrannte Kalk in der Schüttung eine Korngröße von 0,1 bis 200 mm, vorzugsweise 20 bis 150 mm aufweist.

4. Verfahren nach den Ansprüchen 1 bis 3,
**dadurch gekennzeichnet,**
daß der gebrannte Kalk in der Schüttung eine Temperatur von 10 bis 200°C aufweist.

5. Verfahren nach den Ansprüchen 1 bis 4,
**dadurch gekennzeichnet,**
daß man die Kühl- bzw. Verbrennungsluft durch den bereits gebrannten Kalk eines Nachbarofens hindurchleitet.

## Claims

1. Process for the production of lime which is anhydrous or has a low water content in a lime kiln, characterised in that from a vertical lime-burning kiln one continuously or intermittently transfers a part of the calcined lime downwardly into a connected container and passes the cold air, optionally together with the combustion air, upwardly in the lime burning kiln for the drying through the filling of calcined lime formed in this container and removes hydrated lime downwardly from the container.

2. Process according to claim 1, characterised in that, per Nm³ of cooling or combustion air, one uses 0.2 to 5 kg of calcined lime in the filling.

3. Process according to claims 1 and 2, characterised in that calcined lime in the filling has a grain size of 0.1 to 200 mm, preferably 20 to 150 mm.

4. Process according to claims 1 to 3, characterised in that the calcined lime in the filling has a temperature of 10 to 200°C.

5. Process according to claims 1 to 4, characterised in that one passes the cooling or combustion air through the already calcined lime of an adjacent kiln.

## Revendications

1. Procédé pour la production de chaux calcinée anhydre ou pauvre en eau dans un four de calcination de chaux, caractérisé en ce que l'on transfert d'un four de calcination de chaux vertical en continu ou de façon intermittente une partie de la chaux calcinée vers le bas dans un récipient raccordé en amont et en ce que l'on conduit l'air de refroidissement, éventuellement en même temps que l'air de combustion, pour le séchage à travers la masse en vrac de chaux calcinée formée dans ce récipient vers le haut dans le four de combustion de chaux et en ce que l'on extrait la chaux hydratée du récipient vers le bas.

2. Procédé selon la revendication 1, caractérisé en ce que l'on utilise par nm³ d'air de refroidissement ou de combustion 0,2 à 5 kg de chaux calcinée dans la masse en vrac.

3. Procédé selon les revendications 1 et 2, caractérisé en ce que la chaux calcinée dans la masse en vrac présente une taille de particules de 0,1 à 200 mm, de préférence de 20 à 150 mm.

4. Procédé selon les revendications 1 à 3, caractérisé en ce que la chaux calcinée dans la masse en vrac présente une température de 10 à 200°C.

5. Procédé selon les revendications 1 à 4, caractérisé en ce que l'on conduit l'air de refroidissement ou de combustion à travers la chaux déjà calcinée d'un four voisin.